# EUROPÄISCHE PATENTANMELDUNG

(11) **EP 1 353 041 A1**
(43) Veröffentlichungstag der Anmeldung: **15.10.2003**
(21) Anmeldenummer: 02405293.8
(22) Anmeldetag: 12.04.2002
(51) Int. Cl.: F01D 21/04, F02C 6/12

(54) **Turbolader mit Mittel auf der Welle zur axialen Sicherung der besagten Welle beim Bersten des Verdichterrades**

(71) Anmelder: ABB Turbo Systems AG, 5400 Baden (CH)
(72) Erfinder: Kopp, Adrian, 5416 Kirchdorf (CH); Gartmann, Marco, 5426 Lengnau (CH); Gwehenberger, Tobias, 8044 Zürich (CH)
(74) Vertreter: ABB Patent Attorneys

(57) **Zusammenfassung**

Bei einem Turbolader (1), umfassend eine Turbine (2) und einen mit der Turbine (2) verbundenen Verdichter (3), enthält die Turbine (2) ein Turbinenrad (4) und der Verdichter (3) ein Verdichterrad (7), welche mittels einer Welle (10) miteinander verbunden und in einem Gehäuse (5, 9, 16) angeordnet sind. Im Betriebsfall beim Abtrennen des Verdichterrades (7) von der Welle (10) wirkt auf das Turbinenrad (4) und die damit verbundene Welle (10) eine axiale Kraft.
Auf der mit dem Turbinenrad (4) verbundenen Welle (10) ist ein Mittel (22, 25) zur axialen Sicherung der Welle und des damit verbundenen Turbinenrades im Gehäuse (5, 9, 16) angeordnet.

## Beschreibung

### Technisches Gebiet

Die Erfindung geht aus von einem Turbolader nach dem Oberbegriff des ersten Anspruches.

### Stand der Technik

Mittels Turboladern können die Abgase einer Brennkraftmaschine zur Verdichtung für die der Brennkraftmaschine zugeführte Verbrennungsluft genutzt werden. Dazu weist der Turbolader eine Turbine und einen Verdichter auf, die auf einer gemeinsamen Welle sitzen. Die Abgase der Brennkraftmaschine werden in der Turbine entspannt und in Drehenergie umgewandelt. Die gewonnene Drehenergie wird mittels der Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, kann der Verbrennungsprozess und die Energieausbeute der Brennkraftmaschine optimiert werden.
Da bei Turboladern üblicherweise der Mittelteil des Gehäuses wegen des darin enthaltenen Lagers vorgefertigt und geschlossen oder eventuell sogar einstückig ist, kann das Verdichterrad erst beim Zusammenbau des Turboladers mit der Welle und dem darauf befestigten Turbinenrad verbunden werden, damit die Baugruppe Turbine-Welle-Verdichter überhaupt in das Gehäuse eingebaut werden kann. Nachteil dieses Aufbaues ist, dass bei einem Bersten des Verdichterrades die Welle nicht mehr im Gehäuse und durch die Lager axial fixiert ist und es wegen den durch das Turbinenrad erzeugten Axialkräften zu einem axialen Austritt der Welle aus dem Gehäuse kommen kann. Um dies möglichst zu verhindern, werden üblicherweise das Gehäuse oder ein am Gehäuse angebrachter Abgaskrümmer oder Plattendiffusor oder Auspuff so verstärkt, dass abbrechende Teile oder die Welle sicher im Gehäuse gehalten werden. Diese Verstärkungen sind jedoch relativ teuer und aufwendig, und bei hohen durch das Turbinenrad erzeugten axialen Kräften auf die Welle, kann diese trotzdem aus dem Gehäuse austreten und zu schweren Unfällen führen.

### Darstellung der Erfindung

Der Erfindung liegt die Aufgabe zugrunde, bei einem Turbolader der eingangs genannten Art eine einfache und kostengünstige Vorrichtung zur Verhinderung des Austretens der Welle aus dem Gehäuse vorzuschlagen.

Erfindungsgemäss wird dies durch die Merkmale des ersten Anspruches erreicht.

Kern der Erfindung ist es also, dass auf der mit dem Turbinenrad verbundenen Welle ein Mittel zur axialen Sicherung der Welle und des damit verbundenen Turbinenrades im Gehäuse angeordnet ist.

Die Vorteile der Erfindung sind unter anderem darin zu sehen, dass unter Zuhilfenahme einfacher Mittel beim Bersten des Verdichterrades die verbleibende Welle und das darauf befestigte Turbinenrad sicher im Gehäuse gehalten werden kann. Trotz der verwendeten Mittel zur Axialsicherung kann der Turbolader immer noch gleich wie herkömmlich bekannt zusammengebaut und betrieben werden, ohne die Montage oder Demontage zu erschweren. Durch die Verwendung von im wesentlichen radialsymmetrischen Mitteln zur axialen Sicherung werden Einflüsse auf den Rotor, d.h. Unwuchten verhindert.

Es ist besonders zweckmässig, wenn als Mittel zur axialen Sicherung ein Sicherungsring wie z.B. ein Sprengring verwendet wird. Diese Mittel sind billig und einfach in der Anwendung, da neben dem einfach erhältlichen Sicherungsring keine weiteren zusätzlichen Komponenten benötigt werden. Die Änderungen in den bisher verwendeten Komponenten sind zudem minimal. Die Ringnut, welche auf der Welle zur Aufnahme des Sicherungsringes aufgebracht werden muss, ist sehr klein und hat keinen Einfluss auf die Kennwerte der Welle.

Weitere vorteilhafte Ausgestaltungen der Erfindung ergeben sich aus den Unteransprüchen.

### Kurze Beschreibung der Zeichnungen

Im folgenden werden anhand der Zeichnungen Ausführungsbeispiele der Erfindung näher erläutert. Gleiche Elemente sind in den verschiedenen Figuren mit den gleichen Bezugszeichen versehen. Die Strömungsrichtung der Medien ist mit Pfeilen angegeben.

Es zeigen:
- Fig. 1: einen schematischen Längsschnitt durch einen Turbolader gemäss Stand der Technik;
- Fig. 2A: Ausschnitt A aus Fig. 1 in Vergrösserung, aber mit einer ersten Ausführungsform des Erfindungsgegenstandes;
- Fig. 2B: Ausschnitt B aus Fig. 2A in einer weiteren Vergrösserung der ersten Ausführungsform des Erfindungsgegenstandes; und
- Fig. 3: in einer Darstellung analog der Darstellung in Fig. 2A eine zweite Ausführungsform des Erfindungsgegenstandes.

Es sind nur die für das unmittelbare Verständnis der Erfindung wesentlichen Elemente gezeigt. Nicht dargestellt sind von der Anlage beispielsweise die zugehörige Brennkraftmaschine.

### Wege zur Ausführung der Erfindung

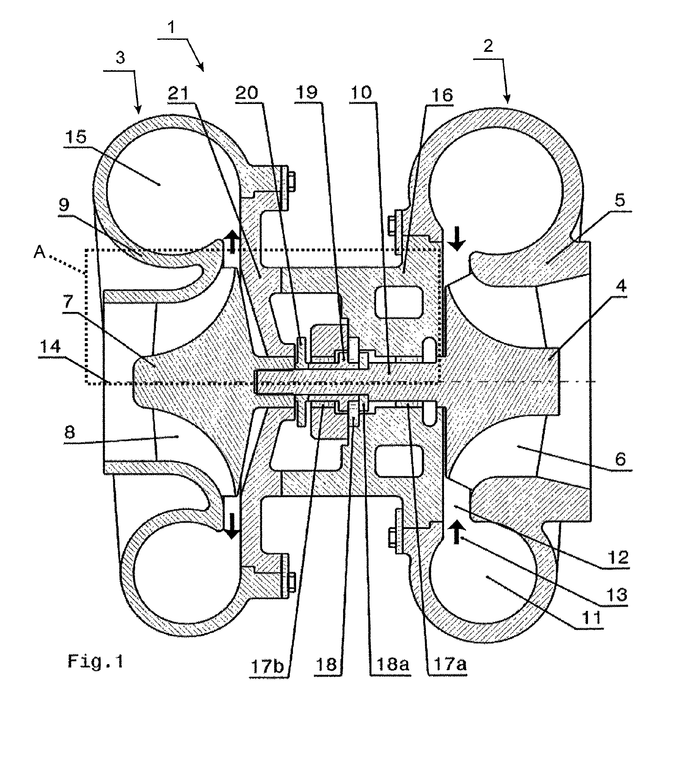

In Fig. 1 ist ein Turbolader 1 umfassend eine Turbine 2 und einen Verdichter 3 schematisch im Längsschnitt dargestellt. Die Turbine 2 umfasst im wesentlichen ein Turbinenrad 4 mit Turbinenschaufeln 6 und ein Turbinengehäuse 5, welches das Turbinenrad 4 umschliesst. Der Verdichter 3 umfasst ein Verdichterrad 7 mit Verdichterschaufeln 8 und ein das Verdichterrad 7 umschliessendes Verdichtergehäuse 9. Das Turbinenrad 4 und das Verdichterrad 7 sind über eine Welle 10 miteinander verbunden, welche mittels verschiedener Lagerelemente im Lagergehäuse gelagert ist. Die Turbine 2 und der Verdichter 3 sind im hier gezeigten Beispiel als Radialturbine und -verdichter ausgelegt. Das Turbinenrad 4 wird in bekannter Weise durch die Abgase einer nicht dargestellten Brennkraftmaschine, die über Kanäle 11, 12 dem Turbinenrad 4 zugeführt werden, angetrieben. Das entspannte und durch die Entspannung abgekühlte Abgas wird über einen nicht weiter dargestellten Abgaskanal abgeführt. Durch die Drehbewegung des Turbinenrades 4 wird das mittels der Welle 10 mit dem Turbinenrad 4 verbundene Verdichterrad 7 ebenfalls in Rotation versetzt. Durch das Verdichterrad 7 wird Luft 14 angesaugt, komprimiert und über einen Abführungskanal 15 in bekannter Weise zur Effizienzsteigerung der nicht dargestellten Brennkraftmaschine zugeführt.

Um den Turbolader 1 zusammenzubauen, wird das mit der Welle 10 verbundene Turbinenrad 4 in Richtung Verdichterseite in ein Lagergehäuse 16 eingeschoben. Das turbinenseitige Radiallager 17a kann dabei, wie hier dargestellt, schon im Lagergehäuse 16 eingebaut sein oder auf die Welle 10 aufgeschoben werden. Danach wird zur weiteren Lagerung der Welle 10 ein Schublager 18, ein Schubring 18a und ein Hilfslager 19 auf die Welle 10 aufgeschoben. Schlussendlich wird auf die Welle der Lagerdeckel 21 mit vormontierter Dichtscheibe 20 und ein verdichterseitiges Radiallager 17b aufgesetzt. Durch Aufschrauben des Verdichterrades 7 auf die Welle 10 werden anschliessend alle aufgeschobenen Elemente 18, 18a, 19, 20 zwischen dem Lagergehäuse 16 und dem Verdichterrad 7 axial fixiert. Auf der Turbinenseite kann nun das Turbinengehäuse 5 über das Turbinenrad 4 geschoben und am Lagergehäuse 16 befestigt werden. Auf der Verdichterseite kann entsprechend das Verdichtergehäuse 9 über das Verdichterrad 7 geschoben und ebenfalls am Lagergehäuse 16 befestigt werden. Bei anderen als dem in diesem Beispiel gezeigten Turboladern können sich die Montageabläufe im Detail etwas anders gestalten, wobei das Grundprinzip des Einschiebens der Welle mit dem Turbinenrad in das Lagergehäuse, das anschliessende Aufschieben der verschiedenen Lagerelemente und der Fixierung des Verdichterrades auf der Welle gleich bleiben.

Durch die Befestigung des Verdichterrades 7 auf der Welle 10 - in diesem Beispiel weist das Wellenende ein Aussengewinde und das Verdichterrad 7 ein Innengewinde für die Fixierung des Verdichterrades auf - wird durch das Zusammenspiel von Dichtscheibe 20, Hilfslager 19, Schublager 18, Schubring 18a, der Radiallager 17a und 17b und des Lagergehäuses 16 die Baugruppe Verdichterrad-Welle-Turbinenrad mit geringem axialem Spiel sicher im Lagergehäuse 16 gehalten. Kommt es jedoch während des Betriebs des Turboladers 1 zum Bersten des Verdichterrades 7 oder schert die Verbindung zwischen Verdichterrad 7 und Welle 10 ab, beschleunigt das Turbinenrad 4 auf unzulässig hohe Drehzahlen, da die sonst durch das Verdichterrad 7 erzeugte Gegenkraft fehlt. Das Turbinenrad 4 unterliegt zudem einer axialen Kraftkomponente, die Mangels sonst vorhandener Kompensation durch das Verdichterrad 7, zu einer Axialbewegung von Welle 10 und Turbinenrad 4 führt. Abhängig von den herrschenden Kräften kommt es unter Zerstörung des Turbinenrades 4 zu einem axialen Austritt von Turbinenrad 4 und Welle 10 aus dem Turbinengehäuse 5. Dies kann zu einer Gefährdung der Umgebung und des Bedienungspersonals führen.

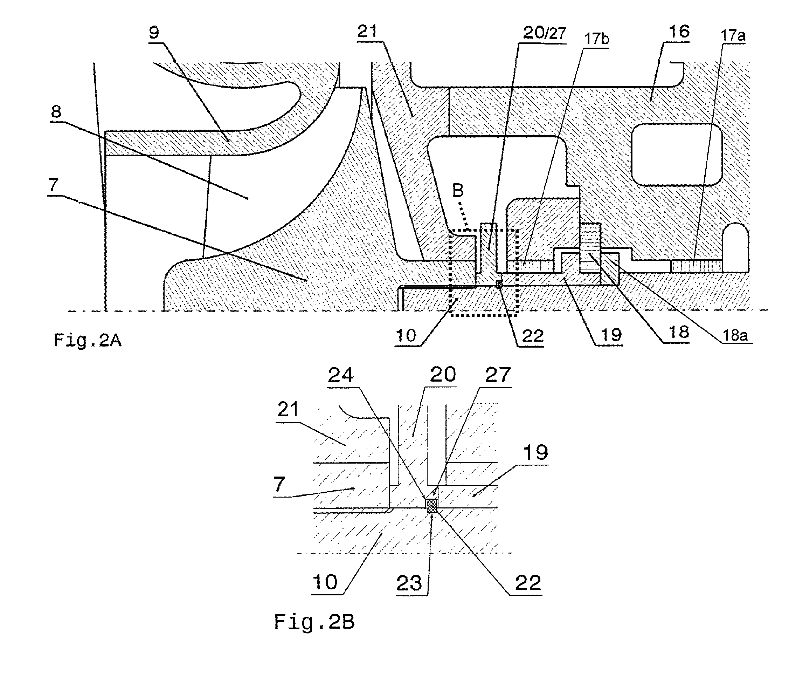

Fig. 2A zeigt einen verdichterseitigen Ausschnitt eines erfindungsgemässen Turboladers 1, der im Prinzip gleich ausgebildet ist wie der in Fig. 1 gezeigte Turbolader 12 gemäss dem Stand der Technik. Wie aber in den Fig. 2A und 2B zu erkennen, ist erfindungsgemäss auf der Welle 10 ein Sicherungsring 22 angeordnet, der als in diesem Beispiel als Sprengring ausgeführt ist. Der Sicherungsring 22 greift in eine Ringnut 23 der Welle 10 ein, die er radial nach aussen überragt und durch deren axiale Flanken der Sicherungsring 22 passgenau oder mit leichtem Spiel für die Montage axial in seiner Position fixiert ist. Denkbar ist auch eine Ringnut deren axiale Breite grösser ist, als die axiale Breite des Sicherungsringes 22 (nicht dargestellt), bei welcher der Sicherungsring 22 bei Stillstand und normal Betrieb nahe der verdichterseitigen Flanke positioniert ist, da für den Kraftfluss der im Berstfall auftretenden axialen Kräfte vor allem die verdichterseitige Flanke relevant ist. Der Sicherungsring 22 ist radial von einem Sicherungselement 27 umgeben, das für die Montage den Sicherungsring 22 mit leichtem radialen Spiel umgibt. Damit sich der Sicherungsring 22 während des Betriebes nicht radial aus der Ringnut 23 heraus bewegen kann, ist dieses radiale Spiel kleiner als die radiale Tiefe der Ringnut 23, so dass das Sicherungselement 27 den Sicherungsring 22 im Betrieb radial passgenau umschliesst. In dem hier gezeigten Beispiel erfüllt die Dichtscheibe 20 zugleich die Aufgabe des Sicherungselements 27, so dass ausser dem Sicherungsring 22 kein zusätzliches Element benötigt wird, was die Montage vereinfacht. Um die Aufgabe des Sicherungselementes 27 zu erfüllen, weist die Dichtscheibe 20 turbinenseitig eine Ausnehmung 24 auf, deren radiale Ausdehnung etwa dem radial über die Ringnut 23 hinausragenden Teil des Sicherungsrings 22 mit Spiel entspricht. Die axiale Breite der Ausnehmung 24 ist etwas grösser als die axiale Breite des Sicherungsringes 22, so dass der Sicherungsring 22 mit axialem Spiel zur Dichtscheibe 20 und zum angrenzenden Hilfslager 19 in der Ringnut 23 der Welle 10 angeordnet ist. Dieses axiale Spiel stellt sicher, dass der Sicherungsring 22 unter normalen Bedingungen im Stillstand und während des Betriebes in axialer Richtung unbelastet ist.
Beim Zusammenbau eines Turboladers 1 mit dem eben beschriebenen erfindungsgemässen Mittel 22 zur axialen Sicherung der Welle 10, wird vorgegangen, wie oben für den Stand der Technik beschrieben ist. Nach dem Einbau des Hilfslagers 19 wird aber erst noch der Sicherungsring 22 in die Ringnut 23 eingebracht. Der Sicherungsring 22 ist, egal ob als Sprengring oder in Form von zusammensetzbaren Ringsegmenten ausgestaltet, so ausgelegt, dass er nach der Plazierung in der Ringnut 23 geschlossen ist und im Stillstand vorzugsweise radial spielfrei auf der Welle sitzt, so dass der Sicherungsring 22 im eingebauten Zustand im wesentlichen radialsymmetrisch ist. Dies ist nötig, um Unwuchten der Welle 10 zu vermeiden. Danach wird die Dichtscheibe 20 über die Welle 10 und mit ihrer Ausnehmung 24 soweit über den Sicherungsring 22 geschoben, dass sie turbinenseitig mit dem Hilfslager 19 in Anschlag kommt. Somit ist der Sicherungsring 22 axial mit Spiel von Dichtscheibe und Hilfslager 19 umgeben während er im Betrieb radial aussen durch die Dichtscheibe 20 passgenau gesichert ist. Danach wird das Verdichterrad 7 z.B. mittels Schraubverbindung mit der Welle 10 verbunden. Das montierte Verdichterrad 7 verpresst Dichtscheibe 20, Hilfslager 19, Schublager 18 und Schubring 18a mit der Welle 10 - genauer mit einer als Widerlager dienenden Schulter der Welle 10 - und fixiert auf diese Weise die genannten Elemente. Das axiale Spiel des Sicherungsringes 22 zwischen Dichtscheibe 20 und Hilfslager 19 bewirkt, dass der Sicherungsring 22 bei Normalbetrieb axial unbelastet ist. Kommt es zum Bersten des Verdichterrades 7, so kann sich die Welle 10 getrieben von den Axialkräften des Turbinenrades 4 nur soweit axial in Richtung Turbinenseite bewegen bis der Sicherungsring 22 mit dem Hilfslager 19 in Anschlag kommt und mittels des Sicherungsringes 22 eine formschlüssige Verbindung zwischen Welle 10 und Hilfslager 19 entsteht. Die Axialkräfte werden dann via das Hilfslager 19 und durch das Schublager 18 in das Lagergehäuse 16 eingeleitet. Durch die Dichtscheibe 20, welche den Sicherungsring 22 radial umschliesst und die durch das Gehäuse axial gehalten wird, bleibt der Sicherungsring 22 weiter radial auf der Welle fixiert.
Nach der Abtrennung des Verdichterrades 7 wird somit durch den Sicherungsring 22 eine axiale Bewegung der Welle 10 in Richtung Turbinenrad 4 verhindert. Da die Gegenkraft durch das Verdichterrad 7 fehlt, dreht das Turbinenrad 4 auf sehr hohe Umdrehungszahlen hoch, bis die Schaufeln 6 oder die gesamte Nabe bersten und dadurch das Turbinenrad 4 abbremst oder bis die Welle 10 durch nicht weiter dargestellte Mittel abgebremst wird.

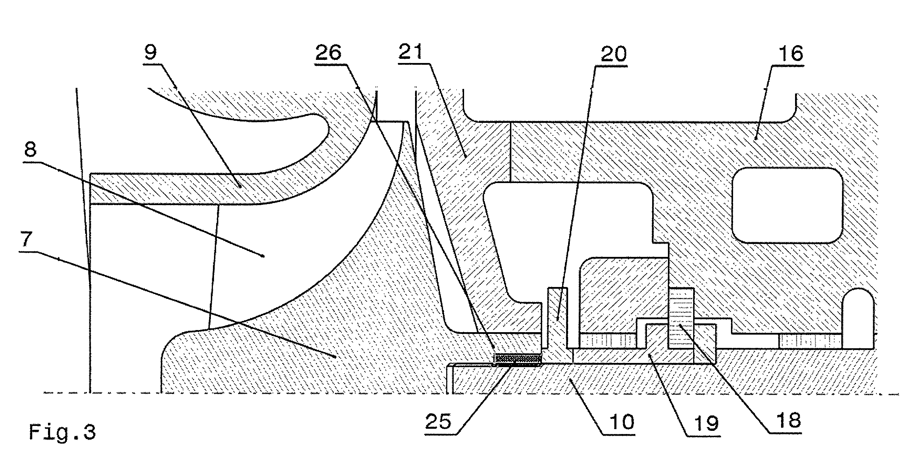

In Fig. 3 ist eine weitere Lösung zur axialen Sicherung der Welle 10 im Schadensfall gezeigt. Nach dem Einbau der Dichtscheibe 20 wird eine im wesentlichen radialsymmetrische Haltehülse 25 auf die Welle 10 aufgebracht und fest mit dieser verbunden, z.B. aufgeschraubt, welche die Dichtscheibe 10 und das Hilfslager 19 auf der Welle hält. Danach wird das Verdichterrad 7 auf die Welle aufgebracht, welche eine Ausnehmung 26 aufweist und die Haltehülse 25 umschliesst.
Falls es zum Bersten des Verdichterrades 7 kommt, und die Welle 10 sich in Richtung Turbinenrad 4 axial bewegen will, kommt es über die Haltehülse 25 zu einer formschlüssigen Verbindung zwischen Welle 10, Dichtscheibe 20 und Hilfslager 19. Das Hilfslager 19 wird seinerseits in axialer Richtung durch das Schublager 18 gesichert, das im Lagergehäuse 16 gehalten ist.
Nach der Abtrennung des Verdichterrades 7 wird mit Hilfe der Haltehülse 25, wie auch bei der vorherigen Lösung durch den Sicherungsring 22, eine axiale Bewegung der Welle 10 in Richtung des Turbinenrades 4 verhindert. Da die Gegenkraft durch das Verdichterrad 7 fehlt, dreht das Turbinenrad 4 auf sehr hohe Umdrehungszahlen hoch, bis die Schaufeln 6 oder die gesamte Nabe bersten und dadurch das Turbinenrad 4 abbremst oder bis die Welle 10 durch nicht weiter dargestellte Mittel abgebremst wird.

Selbstverständlich ist die Erfindung nicht auf die in den Figuren gezeigten und beschriebenen Ausführungsbeispiele beschränkt. Es können andere Ausführungsformen erfindungsgemässer Mittel zur axialen Sicherung vorgesehen sein. Die erfindungsgemässen Sicherungsmittel können auch bei anderen Turbinen- und Verdichterarten als den hier gezeigten verwendet werden. Statt der genannten Lagerelemente können, in abweichend aufgebauten Lagern, auch andere Lagerelemente mit dem erfindungsgemässen, auf der Welle angeordneten Sicherungsmittel in gleicher Weise zusammenwirken. Die beschriebenen und in den Figuren gezeigten Beispiele geben nur an Hand von konkreten Ausführungsformen das Prinzip der Wirkweise des Sicherungsmittels an, und stellen somit keine Beschränkung dar.

### Bezugszeichenliste

- 1: Turbolader
- 2: Turbine
- 3: Verdichter
- 4: Turbinenrad
- 5: Turbinengehäuse
- 6: Turbinenschaufel
- 7: Verdichterrad
- 8: Verdichterschaufel
- 9: Verdichtergehäuse
- 10: Welle
- 11: Zuführungskanal
- 12: Kanal
- 13: Abgas
- 14: Luft
- 15: Abführungskanal
- 16: Lagergehäuse
- 17a: TS Radiallager
- 17b: VS Radiallager
- 18: Schublager
- 18a: Schubring
- 19: Hilfslager
- 20: Dichtscheibe
- 21: Lagerdeckel
- 22: Sicherungsring
- 23: Ringnut
- 24: Ausnehmung Dichtscheibe
- 25: Haltehülse
- 26: Ausnehmung Verdichterrad icherungselement

## Patentansprüche

1. Turbolader (1), umfassend eine Turbine (2) und einen mit der Turbine (2) verbundenen Verdichter (3), wobei die Turbine (2) ein Turbinenrad (4) und der Verdichter (3) ein Verdichterrad (7) umfasst, welche mittels einer Welle (10) miteinander verbunden und in einem Gehäuse (5, 9, 16) derart angeordnet sind, dass im Falle eines Bersten des Verdichterrades (7) auf das Turbinenrad (4) und die mit ihr verbundene Welle (10) eine axiale, in Richtung der Turbine (2) wirkende Kraft einwirkt,
**dadurch gekennzeichnet, dass**
auf der mit dem Turbinenrad (4) verbundenen Welle (10) ein Mittel (22, 25) zur axialen Sicherung der Welle (10) und des mit ihr verbundenen Turbinenrades (4) angeordnet ist, wobei das Mittel (22, 25) im Falle des Berstens des Verdichterrades (7) eine axiale Bewegung der Welle (10) und des mit ihr verbundenen Turbinenrades (4) in Richtung Turbine (2) verhindert.

2. Turbolader nach Anspruch 1,
**dadurch gekennzeichnet,**
**dass** das Mittel (22, 25) zur axialen Sicherung der Welle (10) mit Lagerelementen (18, 18a und 19) der Welle (10) zusammenwirkt.

3. Turbolader nach Anspruch 1 oder 2,
**dadurch gekennzeichnet,**
**dass** das Mittel (22, 25) zur axialen Sicherung der Welle (10) im wesentlichen radialsymmetrisch ist.

4. Turbolader nach Anspruch 1, 2 oder 3,
**dadurch gekennzeichnet,**
**dass** das Mittel (22, 25) zur axialen Sicherung der Welle (10) ein auf der Welle angeordneter Sicherungsring (22) ist.

5. Turbolader nach Anspruch 4,
**dadurch gekennzeichnet,**
**dass** in der Welle (10) eine umlaufende Ringnut (23) zur Aufnahme des Sicherungsrings (22) angeordnet ist, die der eingesetzte Sicherungsring (22) radial nach aussen überragt, wobei vorzugsweise die axialen Flanken der Ringnut (23) den Sicherungsring (22) axial passgenau oder mit Spiel umfangen.

6. Turbolader nach Anspruch 4 oder 5,
**dadurch gekennzeichnet,**
**dass** der Sicherungsring (22) in Form eines Sprengringes oder in Form von zusammenfügbaren Ringsegmenten ausgestaltet ist.

7. Turbolader nach Anspruch 4, 5 oder 6,
**dadurch gekennzeichnet,**
**dass** der Sicherungsring (22) im eingebauten Zustand ein geschlossener die Welle (10) umfassender Ring ist.

8. Turbolader nach einem der Ansprüche 4 bis 7,
**dadurch gekennzeichnet,**
**dass** der Sicherungsring (22) von einem Sicherungselement (27) radial aussen umschlossen ist, wobei im Stillstand ein radiales Spiel vorgesehen ist, das kleiner ist als die radiale Tiefe der Ringnut (23), so dass das Sicherungselement (27) den Sicherungsring (22) während des Betriebes in der Ringnut (23) hält.

9. Turbolader nach Anspruch 8,
**dadurch gekennzeichnet**,
der Sicherungsring (22), insbesondere mittels des Sicherungselementes (27), bei Stillstand und normal Betrieb in axialer Richtung lastfrei ist.

10. Turbolader nach Anspruch 8 oder 9,
**dadurch gekennzeichnet,**
**dass** das Sicherungselement (27) in Form einer Dichtscheibe (20) mit einer turbinenseitig offenen Ausnehmung (24) ausgebildet ist, und die axiale Ausdehnung der Ausnehmung (24) grösser ist als die axiale Ausdehnung des Sicherungsringes (22), während die radiale Ausdehnung der Ausnehmung (24) so bemessen ist, dass sie den Sicherungsring (22) im Stillstand vorzugsweise nur mit leichtem radialen Spiel umschliesst.

11. Turbolader nach Anspruch 1, 2 oder 3,
**dadurch gekennzeichnet,**
**dass** das Mittel (22, 25) zur axialen Sicherung der Welle (10) eine auf der Welle (10) befestigte Haltehülse (25) ist.

12. Mittel zur axialen Sicherung einer Welle und der mit dieser Welle fest verbundenen Bauteile eines Turboladers, wobei auf der Welle ein Turbinenrad und ein Verdichterrad derart drehfest angeordnet sind, dass im Falle eines Bersten eines der beiden Laufräder auf die Welle und auf die mit ihr fest verbundenen Bauteile eine axial wirkende Kraft einwirkt,
**dadurch gekennzeichnet, dass**
das besagte Mittel (22, 25) derart mit der Welle (10) verbunden ist, dass es im Falle des Berstens mit Lagerelementen (18, 18a und 19) der Welle (10) zusammenwirkt, so dass die axial wirkende Kraft durch dieses Zusammenwirken kompensiert und eine axiale Bewegung der Welle (10) und der mit ihr fest verbundenen Bauteile (4) verhindert wird.
